# EUROPEAN PATENT SPECIFICATION

(11) **EP 0 357 464 B1**
(45) Date of publication and mention of the grant of the patent: **10.05.1995**
(21) Application number: 89308927.6
(22) Date of filing: 04.09.1989
(51) Int. Cl.: G06F 12/08, G06F 12/16

(54) **Information recording and reproducing apparatus using optical discs**
Informationsaufzeichnungs- und -wiedergabegerät mit optischen Speicherplatten
Appareil d'enregistrement et de reproduction d'information avec disques optiques

(30) Priority: 02.09.1988 JP 220945/88
(43) Date of publication of application: 07.03.1990
(73) Proprietor: MATSUSHITA ELECTRIC INDUSTRIAL CO., LTD., Kadoma-shi, Osaka-fu, 571 (JP)
(72) Inventor: Satoh, Isao, Neyagawa-shi Osaka (JP); Fukushima, Yoshihisa, Osaka-shi Osaka (JP)
(74) Representative: Senior, Alan Murray

(56) References cited:
- EP-A- 0 156 179
- EP-A- 0 273 665
- US-A- 4 077 059

## Description

The present invention relates to information recording and reproducing apparatus and more particularly to such an apparatus which effects the recording and reproduction of data by using optical disks.

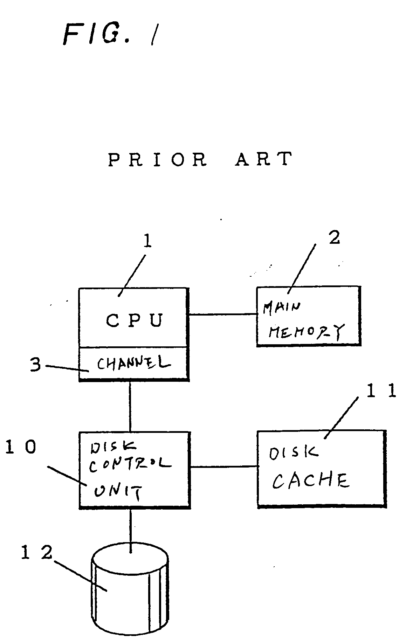

A conventional information recording and reproducing apparatus using a magnetic disk drive is disclosed in "NIKKEI ELECTRONICS" 1985. 3.11, pp. 159-187, Fig. 1 showing an arrangement of the conventional information recording and reproducing apparatus. In Fig. 1, illustrated at numeral 1 is a central processing unit (CPU) of a host computer which acts as a host device for recording and reproduction of data in and from a magnetic disk drive 12. Also included in the conventional information recording and reproducing apparatus are a main memory 2 for the CPU 1 which stores data and programs and a channel 3 for the CPU 1 which is for control of the input and output of data. Numeral 10 represents a disk control unit for controlling the magnetic disk drive 12 and a disk cache memory 11 to allow speeding-up of the data recording and reproduction, the disk cache memory 11 is a memory for speeding-up of data access between the magnetic disk drive 12 and the CPU 1.

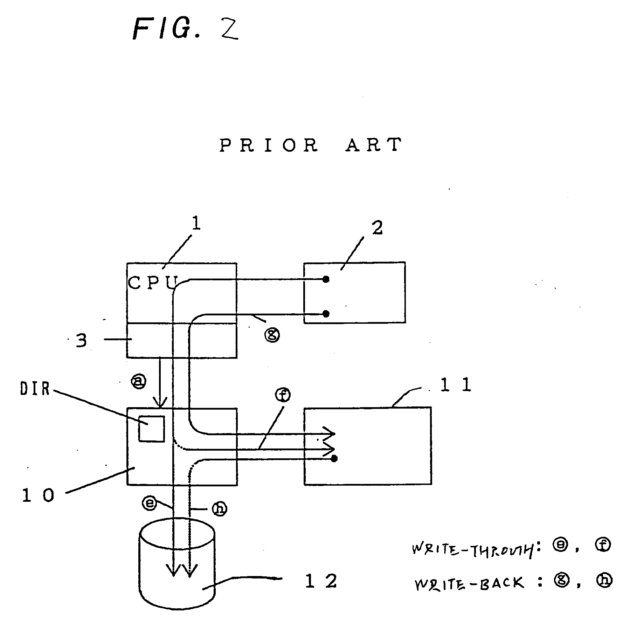

The operation of the conventional recording and reproducing apparatus with the above-described arrangement will be described hereinbelow with reference to a data read and write flow chart illustrated in Fig. 2.

In a data-read operation, on the first access of a specific file, the disk control unit 10 prefetches the next block of the file if it is not in the cache memory 11. In this situation, in response to a data-read demand ⓐ from the CPU 1 with respect to a file, the disk control unit 10 refers to a directory DIR of the disk cache memory 11, which is in the disk control unit 10, to check whether or not the desired data block of the pertinent file is present in the disk cache memory 11. If it is present (i.e. a hit) the data block is transmitted from the disk cache memory 11 via the channel 3 to the main memory 2. If it is not in the disk cache (miss), several blocks (made up of sectors) including the desired (target) block are read from the disk and stored in the disk cache memory 11. The desired block is also transmitted to the main memory 2. Thus, if the disk cache memory 11 has a high hit probability, data is read from the disk cache memory 11 rather than the disk thus increasing the data access speed.

In a data-write operation, well-known write-through and write-back systems are used which depend on the order of rewriting between the disk cache memory 11 and the magnetic disk driver 12.

In the write-through system, data is first written on the magnetic disk driver 12 (ⓔ). If the block corresponding to the recorded data is present in the disk cache memory 11, that is, in the case of hit, the corresponding block in the disk cache memory 11 is considered invalid and the data is written in the disk cache memory 11 (ⓕ).

On the other hand, in the write-back system, data are first written into the disk cache memory 11 (ⓖ), and when there is no unoccupied area to write the data to in the disk cache memory 11, when the block is no longer necessary or when the system decides that data which has not been copied should be transmitted to the magnetic disk drive 12, the data in the disk cache memory 11 is transmitted to the magnetic disk drive 12 where it is recorded (ⓗ).

The above-described systems have both advantages and disadvantages. In the write-through system, although data is not lost as a result of a power-failure, there is a limit to the write cyclability (the number of times data can be recorded on the same medium) when using a rewritable optical disk rather than a magnetic disk drive 12. That is, each time data is written by the host device it is written on the optical disk. An optical disk using a magneto-optical recording medium or a phase change recording medium which records and erases a signal by heating with a laser light beam, has a disadvantage that the number of times data may be recorded and erased is limited because of the thermal stress caused by the laser light beam. For example, it is known that the write cyclability of a magneto-optical disk is between 1,000,000 and 10,000,000 and the write cyclability of a phase change recording medium which effects the phase change between the amorphous state and crystalline state using heat from a laser light beam is about 1,000,000.

On the other hand, in the write-back system, if the power is cut-off prior to the writing of the data in the disk cache memory 11 to the magnetic disk driver 12, the data in the disk cache memory 11, is lost and therefore the disk cache memory 11 requires a battery back-up system. In addition, it is necessary to store the contents of the disk cache memory 11 in the magnetic disk drive 12 before the power source is cut-off.

It is therefore an aim of the present invention to provide an information recording and reproducing apparatus which is capable of raising the limit for the number of times of rewriting of an optical disk and capable of restoring data in response to power failure, power-off and hardware error in an optical disk drive.

EP-A-0,273,665 discloses a system employing a work optical disk and a magnetic disk. Data is first written to the magnetic disk and only when that is full, the oldest data is written to the optical disk.

According to the present invention there is provided an information recording and reproducing apparatus comprising;
an optical disk data storage device for storing data; a work optical disk data storage device for temporarily storing the data; and
a storage device control unit for coupling said optical disk data storage device and said work optical disk data storage device to a host device to control recording and reproduction of the data; said storage device control unit being operative to, in use, write data-update control commands and recording data issued by said host device to said work optical disk data storage device and also write said recording data to said optical disk data storage device in accordance with said control commands so that, in response to the occurrence of an error or fault in said optical disk data storage device, the state of said optical disk data storage device can be restored using the control commands and recording data read from the work optical disk data storage device; and
a cache memory for temporarily storing the data; wherein
said storage device control unit further controls said cache memory and said storage devices so as to first write said recording data to said work data storage device and simultaneously to said cache memory and to write said recording data from said cache memory to said data optical disk drive in accordance with a write-back system.

A feature of the present invention involves making up an information recording and reproducing apparatus by using a data optical disk drive for storing data, a work optical disk drive for temporarily storing data, and an optical disk control unit for controlling recording and reproduction of data with the data optical disk drive and the work optical disk drive being coupled to the host device.

With this arrangement, the optical disk control unit records both data updating control commands and recording data, fed from the host device, into the work optical disk drive and, in addition, records the recorded data into the data optical disk drive in accordance with drive control command. In response to the data optical disk drive entering into a failure state, the optical disk control unit reproduces the control commands and the recorded data recorded in the work optical disk drive so as to restore the data of the data optical disk drive in accordance with the reproduced control commands. Thus, even in the case of occurrence of an error such as power abnormality and hardware error, it is possible to restore the data by using the control commands and data stored in the work optical disk drive, thereby preventing the data from being lost.

A preferred feature of the present invention involves making up an information recording and reproducing apparatus by using a disk cache memory for temporarily storing data from a host device, an optical disk control unit for controlling an optical disk drive and the disk cache memory, and a work optical disk drive for temporarily recording data.

With this arrangement, the optical disk control unit first records the recorded data transmitted from the host device into the work optical disk drive and, in addition, writes it into the disk cache memory so as to record the data of the disk cache memory into the optical disk drive if required. This allows sharply decreasing the number of times of recording accesses of the data optical disk drive.

With the present invention, it is possible to sharply decrease the data writing to the optical disk by using the disk cache memory and to prevent data loss on power abnormality by always recording the written data into the work optical disk, thereby resulting in the practical effect being great.

Preferably, the apparatus according to the first aspect of the present invention may further comprise a apparatus according to claim 1, further comprising a cache memory for temporarily storing the data, and wherein said optical disk control unit further controls said cache memory and said storage devices so as to first write said recording data said to work data storage device and simultaneously to said cache memory and said recording data from said cache memory to said data optical disk drive in accordance with a write-back system.

The aims and features of the present invention will be further described hereinafter with reference to the following detailed description of preferred exemplary embodiments taken in conjunction with the accompanying drawings in which:
Fig. 1 is a block diagram showing an arrangement of a conventional information recording and reproducing apparatus;
Fig. 2 is an illustration of flow of data in the Fig. 1 conventional information recording and reproducing apparatus;
Fig. 3 is a block diagram showing an arrangement of an information recording and reproducing apparatus according to an embodiment of the present invention;
Fig. 4 is an illustration of flow of data in Fig. 3 information recording and reproducing apparatus; and
Fig. 5 shows one example of a data-recording locus on an optical disk of a work optical disk drive used in the Fig. 3 apparatus.

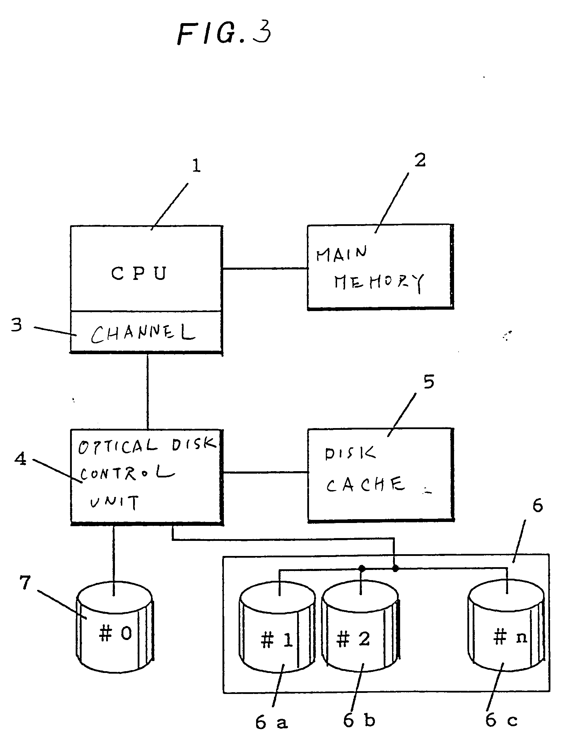

Referring now to Fig. 3, there is illustrated an information recording and reproducing apparatus according to an embodiment of the present invention, where parts corresponding to those in Figs. 1 and 2 conventional information recording and reproducing apparatus will be marked with the same numerals. In Fig. 3, illustrated at numeral 1 is a CPU of a host computer which acts as a host device. The CPU 1 is coupled to a main memory 2 for storing data and programs. Numeral 3 is a channel for input and output control of data to and from the CPU 1. Also included in the information recording and reproducing apparatus is an optical disk control unit 4 which controls a data optical disk drive 6, a work optical disk drive 7 and a disk cache memory 5 so as to effect speeding-up of data recording and reproduction. The disk cache memory 5 in advance reads out and stores data to effect speeding-up of data access by the CPU 1. The data optical disk drive 6 comprises a plurality of optical disk drives 6a, 6b and 6c so as to increase the storage capacity of the apparatus and the work optical disk drive 7 once stores recording data from the CPU 1.

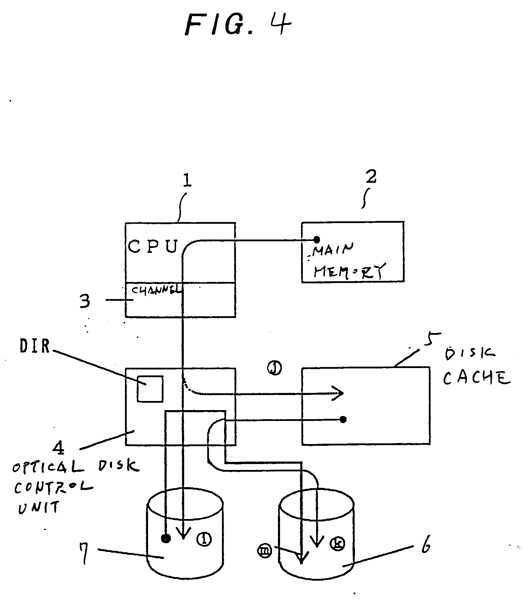

Fig. 4 is an illustration of flows of data in a data-writing operation. In Fig. 4, characters ⓘ and ⓙ designate a flow of data to be recorded from the main storage 2 into the work optical disk drive 7 in accordance with the write-through system and a flow of the recording data to be written therefrom into the disk cache memory 5 in accordance with the same system. Further, a character ⓚ represents a flow of the data to be written from the disk cache memory 5 in the data optical disk drive 6 in accordance with the write-back system and a character ⓜ depicts a flow of data in data-restoring where the latest data from the work optical disk drive 7 are restored with respect to the data optical disk drive 6 under control of the optical disk control unit 4.

A description will be given hereinbelow in terms of a data-writing operation of the information recording and reproducing apparatus of this embodiment. The CPU 1 issues a data-writing command to the optical disk control unit 4 so that data are transmitted from the main storage 2. The data transmitted through the channel 3 therefrom are recorded in the work optical disk drive 7 (ⓘ) and, at the same time, recorded in the disk cache memory 5 in accordance with the write-through system (ⓙ). The recording data are recorded in the work optical disk drive 7 in the arrival order of the data and command from the CPU 1 so as to take a sequential file structure.

The optical disk control unit 4 transmits the data of the disk cache memory 5 to the data optical disk drive 6 so that the data are written therein in the write-back writing conditions: the data is unnecessary, an empty area is made in the disk cache memory 5 for storing other data, generally the data replacement mechanism of the disk cache meory 5 determines that new data are entered into the disk cache memory 5 or that the contents of the disk cache memory 5 match the contents of the data optical disk drive 6.

That is, with the capacity of the disk cache memory 5 and the data replacement algorithm being appropriately selected, it is possible to sharply decrease the actual number of times of the recording of data from the disk cache memory 5 to the data optical disk drive 6. For example, if a directory DIR whose rewriting frequency becomes maximum is always placed in the disk cache memory 5, this effect becomes extremely great. In case of detection of hardware errors of the optical disk drive 6 such as insufficient or excessive recording laser power output, track jumping-over in recording, uncorrectable error of the read data, and diagnostic error, the operator should cut off the power of the apparatus for removal of the pertinent optical disk drive whereby the content of the disk cache memory 5 is lost. Furthermore, similarly, when the power failure suddenly occurs during recording of data or when the power source is cut off before the contents of the disk cache memory 5 match the contents of the data optical disk drive 6, the contents of the disk cache memory 5 are lost.

The optical disk control unit 4, on power-up, checks the contents of the data optical disk drive 6 on the basis of the contents of the data optical disk drive and work optical disk drive 7. If all of the commands recorded in the work optical disk 7 are normally processed with respect to the data optical disk drive 6, the optical disk control unit 4 indicates the completion of the power-up of the apparatus for the CPU 1. When the command recorded in the work optical disk drive 7 is not processed with respect to the data optical disk drive 6, the optical disk control unit 4 reads out the commands and data recorded in the work optical disk drive 7 so as to compare them with the contents of the data optical disk drive 6 to search an non-processed file. Recording into the data optical disk drive 6 is performed by using the commands and data, corresponding to the non-processed file, read out from the work optical disk drive 7 whereby the data optical disk drive 6 can be restored so as to becomes the latest state.

The data-reading operation is the same as the conventional example and therefore the description will be omitted.

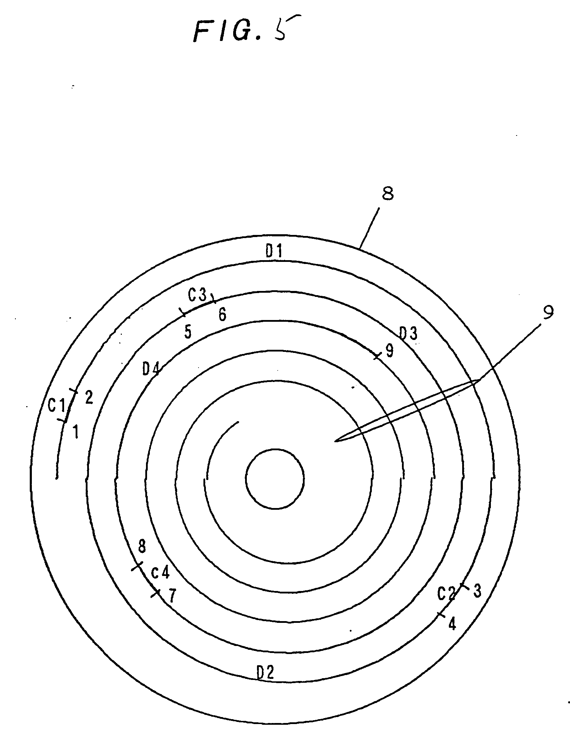

Fig. 5 shows a recorded locus of data recorded on an optical disk of the work optical disk drive 7. In Fig. 5, numeral 8 represents an optical disk and numeral 9 designates a track formed spirally. As illustrated in Fig. 5, the work optical disk drive 7 successively records commands and data from the CPU 1 as a sequential file in the increasing order of the track sector adresses. As the first data, a command C1 is written in an area (1-2) of a track 9 and a datum D1 is written in an area (2-3) thereof. Thereafter, as the second data, a command C2 is recorded in an area (3-4) and a datum D2 is recorded in an area (4-5). Further, as the third data, a command C3 is recorded in an area (5-6) and a datum D3 is recorded in an area (6-7). Still further, as the fourth data, a command C4 is written in an area (7-8) and a datum D4 is written in an area (8-9).

The data from the CPU 1 are recorded in both the work optical disk drive 7 and the disk cache memory 5. In the data optical disk drive 6 are written the data of the disk cache memory 5. Thus, the work optical disk drive 7, being prepared for the next recording after recording of the data, is arranged so as to make it unnecessary to effect the track retrieval on recording the next data with an optical head of the work optical disk drive 7 retracing the finally formed track. That is, the optical head can access quickly to the target sector only by waiting for rotation of a predetermined sector, because it is already placed on the target track. Moreover, control is performed so that for recording data the addressing is continuously effected from the final track sector of the optical disk 8 to the first track sector thereof. This always allows the backup of data corresponding to the recording capacity of the optical disk 8. Generally, this recording capacity is about several times of 100 MB and therefore the backup capacity results in entering into an infinite state.

For example, when the recording capacity is 300 MB and the write cyclability is 100,000, the equivalent capacity becomes as extremely large as 300MB x 100,000 = 30 x 10¹²B (30TB (Tera byte)). Accordingly, the over of the write cyclability occurs only when as much as 30 TB of the data are written. This means a data scale which is not occupied by a general large-scale system during several years to several times of ten years. Thus, the optical disk 8 may be exchanged by a new one after reaching the limit of the write cyclability and the interval of the exchanging is over several years, thereby resulting in eliminating a problem in the practical level.

Thus, if the track of the optical disk 8 is formed spirally, data can successively be written without waiting for rotation of the disk 8, and further with a sequential file being taken, the track access time with respect to the work optical disk drive 8 can be shortened so as to be only the rotation waiting time.

As described above, according to this embodiment, the recording data to the work optical disk drive 7 are written in accordance with the write-through system and the data-writing to the data optical disk drive 6 for actually storing the data is performed in accordance with the write-back system, thereby allowing prevention of data loss during power-off and further reduction of the number of times of writting to the optical disk.

In addition, since the work optical disk drive 7 sequentially records data in a spiral form, the data access time results in only the waiting time of rotation of the optical disk. Moreover, since the data are recorded so as to form a spiral track, the data recording can be effected with respect to plural tracks without requiring the rotation waiting like the track made so as to form concentric circles, the speed performance becomes above two times of that of the magnetic disk. Here, with the improvement of the data access speed generally achieved by the disk cache memory, the general access time, 50 to 100 ms, of the optical disk drive can be improved up to the access time of the magnetic disk drive.

Although in the above description the optical disk drive is used as a disk drive, it is not limited to the optical disk and it is also appropriate to use a magnetic disk drive. In addition, the optical disk is not limited to one of the phase change rewriting type optical disks and it is also appropriate to use a magneto-optical disk. Furthermore, although in this embodiment the apparatus is equipped with the disk cache memory, even if the apparatus is arranged so as to be provided with only the work optical disk drive, data optical disk drive and optical disk control unit for controlling these drives but not equipped with the disk cache memory, it is possible to restore the data of the data optical disk drive during occurrance of abnormality.

## Claims

1. An information recording and reproducing apparatus comprising;
an optical disk data storage device (6) for storing data; a work optical disk data storage device (7) for temporarily storing the data; and
a storage device control unit (4) for coupling said optical disk data storage device (6) and said work optical disk data storage device (7) to a host device to control recording and reproduction of the data; said storage device control unit (4) being operative to, in use, write data-update control commands and recording data issued by said host device to said work optical disk data storage device (7) and also write said recording data to said optical disk data storage device (6) in accordance with said control commands so that, in response to the occurrence of an error or fault in said optical disk data storage device (6), the state of said optical disk data storage device (6) can be restored using the control commands and recording data read from the work optical disk data storage device (7); and
a cache memory (5) for temporarily storing the data; wherein
said storage device control unit (4) further controls said cache memory (5) and said storage devices (6,7) so as to first write said recording data to said work data storage device (7) and simultaneously to said cache memory (5) and to write said recording data from said cache memory (5) to said data optical disk drive (6) in accordance with a write-back system.

2. An apparatus according to claim 1, wherein said recording data and said control commands are recorded in said work optical disk data storage device (7) in time order as a sequential file.

3. An apparatus as according to claim 1, wherein said storage device control unit (4) writes the data into said work storage means so as to average out the number of record accesses to a sector of said work optical disk drive and to decrease the number of record operations performed in a particular sector.

4. An apparatus according to claim 1, 2 or 3, wherein said work optical disk drive (7) is adapted to record data on a spiral track on an optical disk.

## Patentansprüche

1. Informationsaufzeichnungs- und -wiedergabegerät mit:
einer optischen Daten-Plattenspeichereinrichtung (6) zum Speichern von Daten,
einer optischen Arbeits-Daten-Plattenspeichereinrichtung (7) zum vorübergehenden Speichern der Daten,
einer Speichereinrichtungs-Steuereinheit (4) zum Verbinden der optischen Daten-Plattenspeichereinrichtung (6) und der optischen Arbeits-Daten-Plattenspeichereinrichtung (7) mit einer Verarbeitungseinrichtung zum Steuern der Aufzeichnung und Wiedergabe der Daten, wobei die Speichereinrichtungs-Steuereinheit (4) im Betrieb zum Schreiben von Datenaktualisierungs-Steuerbefehlen und aus der Verarbeitungseinrichtung ausgegebenen Aufzeichnungsdaten in die optische Arbeits-Daten-Plattenspeichereinrichtung (7) und auch zum Schreiben der Aufzeichnungsdaten in die optische Daten-Plattenspeichereinrichtung (6) entsprechend den Steuerbefehlen dient, so daß im Ansprechen auf das Auftreten eines Fehlers oder einer Störung in der optischen Daten-Plattenspeichereinrichtung (6) der Zustand der optischen Daten-Plattenspeichereinrichtung (6) unter Verwendung der Steuerbefehle und der aus der optischen Arbeits-Daten-Plattenspeichereinrichtung (7) ausgelesenen Aufzeichnungsdaten wieder hergestellt werden kann, und
einem Cachespeicher (5) zum vorübergehenden Speichern der Daten, wobei
die Speichereinrichtungs-Steuereinheit (4) außerdem den Cachespeicher (5) und die Speichereinrichtungen (6, 7) derart steuert, daß zunächst die Aufzeichnungsdaten in die optische Arbeits-Daten-Speichereinrichtung (7) und gleichzeitig in den Cachespeicher (5) geschrieben werden und die Aufzeichnungsdaten aus dem Cachespeicher (5) in die optische Daten-Plattenspeichereinrichtung (6) entsprechend einem Rückschreibsystem geschrieben werden.

2. Gerät nach Anspruch 1, wobei die Aufzeichnungsdaten und die Steuerbefehle in der optischen Arbeits-Daten-Plattenspeichereinrichtung (7) in zeitlicher Reihenfolge als sequentielle Datei aufgezeichnet werden.

3. Gerät nach Anspruch 1, wobei die Speichereinrichtungs-Steuereinheit (4) die Daten in die Arbeits-Speichereinrichtung schreibt, damit der Durchschnitt von einer Anzahl von Aufzeichnungszugriffen auf einen Sektor der optischen Arbeits-Platteneinheit genommen und die Anzahl von in einem bestimmten Sektor durchgeführten Aufzeichnungsvorgängen verringert wird.

4. Gerät nach Anspruch 1, 2 oder 3, wobei die optische Arbeits-Platteneinheit (7) Daten auf einer spiralförmigen Spur auf einer optischen Platte aufzeichnet.

## Revendications

1. Appareil d'enregistrement et de reproduction d'informations, qui comprend :
- un dispositif (6) de stockage de données sur disque optique destiné à stocker des données,
- un dispositif (7) de stockage de données sur disque optique de travail destiné à stocker temporairement des données, et
- une unité de commande (4) des dispositifs de stockage, destinée à coupler ledit dispositif (6) de stockage de données sur disque optique et ledit dispositif (7) de stockage de données sur disque optique de travail à un dispositif central destiné à commander l'enregistrement et la reproduction des données, ladite unité de commande (4) des dispositifs de stockage servant, en cours d'utilisation, à écrire des instructions de commande pour la remise à jour des données et des données d'enregistrement délivrées par ledit dispositif central audit dispositif (7) de stockage de données sur disque optique de travail, et à écrire également lesdites données d'enregistrement dans ledit dispositif (6) de stockage de données sur disque optique en accord avec lesdites instructions de commande de sorte que, s'il survient une erreur ou un défaut dans ledit dispositif (6) de stockage de données sur disque optique, l'état dudit dispositif (6) de stockage de données sur disque optique peut être rétabli à l'aide des instructions de commande et des données d'enregistrement lues dans ledit dispositif (7) de stockage de données sur disque optique de travail, et
- une mémoire d'attente (5) destinée à stocker temporairement les données,
dans lequel ladite unité de commande (4) des dispositifs de stockage commande en outre ladite mémoire d'attente (5) et lesdits dispositifs de stockage (6, 7) de manière à d'abord écrire lesdites données d'enregistrement dans ledit dispositif (7) de stockage de données sur disque optique de travail et simultanément dans ladite mémoire d'attente (5), et à écrire lesdites données d'enregistrement de ladite mémoire d'attente (5) audit dispositif (6) de stockage de données sur disque optique en accord avec un dispositif de ré-écriture.

2. Appareil selon la revendication 1, dans lequel lesdites données d'enregistrement et lesdites instructions de commande sont enregistrées dans ledit dispositif (7) de stockage de données sur disque optique de travail de manière ordonnée dans le temps à la façon d'un fichier séquentiel.

3. Appareil selon la revendication 1, dans lequel ladite unité de commande (4) des dispositifs de stockage écrit les données dans ledit dispositif de stockage de travail de manière à faire la moyenne du nombre d'accès d'enregistrement à un secteur dudit disque optique de travail et à diminuer le nombre d'opérations d'enregistrement effectuées dans un secteur particulier.

4. Appareil selon la revendication 1, 2 ou 3, dans lequel ledit dispositif (7) de stockage de données sur disque optique de travail est apte à enregistrer des données sur une piste en spirale se trouvant sur un disque optique.
